# EUROPEAN PATENT APPLICATION

(11) **EP 3 421 275 A1**
(43) Date of publication of application: **02.01.2019**
(21) Application number: 17382411.1
(22) Date of filing: 29.06.2017
(51) Int. Cl.: B60G 7/00

(54) **STABILIZER LINK FOR A VEHICLE SUSPENSION**

(71) Applicant: Industria Auxiliar Alavesa S.A., 01470 Amurrio (Álava) (ES)
(72) Inventor: MOSTEIRO GOYOAGA, Jose Ramón, 48340 AMOREBIETA (Vizcaya) (ES)
(74) Representative: Herrero & Asociados, S.L.

(57) **Abstract**

The invention relates to a stabilizer link for a vehicle suspension, comprising a body (1) formed by a slender central segment (2) aligned according to a longitudinal axis (2'), a first end (3) and a second end (4), where the entire body (1) is a single piece of sheet metal shaped such that the central segment (2) has an open cross section, and the shape of the first end (3) defines a semi-enclosed socket (5) having a partially spherical or conical configuration configured for housing an axial ball (6) extending from the central segment (2) of the body (1), the link comprising a covering (7) made of polymeric material surrounding said first end (2), preventing the axial ball (6) from being able to come out of the socket (5) defined by the first end (3).

## Description

### Technical Field of the Invention

The present invention relates to a stabilizer link for a vehicle suspension, which has an application in the automotive industry, and more specifically in the field of the components industry for suspension systems of the automobile itself, which allows simplifying the production thereof, which accordingly allows reducing production costs.

### Background of the Invention

Suspension systems in automotive vehicles today use stabilizers to transmit the stress generated by the stabilizer bar to the suspension of the wheel, and vice versa, generating in the vehicle chassis a moment opposite the roll moment of the vehicle, thereby achieving greater lateral rigidity of the vehicle, which translates into a minimization of the lateral tilt of the body of the vehicle when it is subjected to a lateral acceleration force, such as the force that is generated, in a more or less pronounced manner depending on speed, when the vehicle goes around a curve.

Stabilizers are usually formed by a longitudinal body that is usually an element having a cylindrical configuration incorporating housings at its ends for assembling joints, usually ball and socket joints, or elastic joints referred to as silent-blocks. one of the joints is attached to the stabilizer or torsion bar and the other joint is attached to the shock absorber of the vehicle, wherein it can also be anchored to any other element of the suspension instead of to the shock absorber, for example to a suspension arm.

Therefore, the stabilizer comprises two kinematic centers at its ends which are the center of rotation of the joints located in said ends.

Ball and socket joints usually have an intermediate part between the ball and the body referred to as the seat, the function of which is to assure the positioning of the ball in the kinematic center, to allow transferring stress from the ball to the body and to allow the rotation of the ball with respect to the body. The seat is integrally attached to the body, so between the ball and the remaining components described up until now there is relative movement.

There are different types of stabilizers on the market which have different configurations according to each specific application. These elements usually have a series of requirements common to all of them, among which the requirements of having a given rigidity, having the lowest possible weight, allowing the quickest assembly possible and having the lowest cost possible must be pointed out.

In this sense there are steel stabilizers characterized by weighing too much and showing little resistance to corrosion, where the covering of the body is required. An advantage of stabilizers of this type is their high rigidity. There are also aluminum stabilizers, which weigh less than steel stabilizers but offer less rigidity. Finally, there are plastic stabilizers characterized by not weighing a lot and being less expensive; however, these plastic stabilizers must have a larger volume in order to achieve a rigidity that is equivalent to the others mentioned.

A particular application is the case in which one of the joints must be an axial ball, i.e., the orientation of the ball is not perpendicular to the body of the stabilizer but rather it extends according to the orientation of the body itself, i.e., the ball is aligned with the longitudinal axis of the body of the stabilizer instead of being arranged at 90°.

Axial ball and socket joints are obtained today from a metal bushing on which the corresponding machining operations are performed to produce a seat and a rim for preventing the ball from coming out. The bushing can be closed at one of its ends or open at both ends, in which case one of the ends is closed by means of arranging a cap, while all this is for the purpose of defining a space containing the ball to prevent it from coming out. The machined bushing is then attached to the longitudinal body of the stabilizer, which is usually done by means of welding operations.

In addition to the aforementioned steps, it is also necessary to refer to those steps that involve the actual placement of any ball, whether axial or at 90°, in which once the housing is defined in the bushing, the ball is inserted with a plastic seat already in the bushing, and if required, a metal cap is then placed in the lower portion and the edges of the bushing are secured for fixing the entire assembly.

Based on the foregoing, it can be inferred that the production of stabilizers incorporating axial ball and socket joints today is slow as a result of the machining process and the process of attaching the bushings and longitudinal body of the stabilizer by welding, with the costs this entails. On the other hand, the welding areas are always susceptible to breaking, with the subsequent reduction of the reliability of the component that this entails.

### Description of the Invention

The present invention relates to a stabilizer link for a vehicle suspension, which allows simplifying the manufacturing process for producing them, with the subsequent cost reduction this entails, in addition to dispensing with weak areas susceptible to mechanical failure, such as the welding areas.

The stabilizer link proposed by the invention comprises a body formed by a slender central segment aligned according to a longitudinal axis, a first end and a second end.

According to the invention, the entire body is a single piece of sheet metal shaped such that the central segment has an open, preferably U-shaped cross section. In turn, the shape of the first end defines a semi-enclosed socket having a partially spherical or conical configuration configured for housing an axial ball extending from the central segment of the body. Said extension of the axial ball with respect to the longitudinal axis is such that the allowed rotations of the axial ball once it is in place mean that it is either aligned with the longitudinal axis or else aligned according to an axis parallel to said longitudinal axis, or forming a specific angle between the axis of the ball and the longitudinal axis, i.e., it is contemplated that the axial ball has a certain angle, of little value, with respect to the longitudinal axis.

The link also comprises a covering made of polymeric material surrounding at least the first end, preventing, should it be required, the axial ball from being able to come out of the socket defined by the first end, in collaboration with auxiliary elements such as retaining rings or a weld bead.

The process of producing the link is performed as follows: using a press-formed steel sheet, the link is shaped until obtaining the semi-enclosed socket at the first end in which the ball will later be housed. Subsequently, once the ball has been introduced in the socket, the material forming the edge of the socket is deformed so that the ball does not come out; then a metal outer ring is placed to prevent the deformed part of steel defining the space containing the ball from opening up. This allows improving its axial performance, and as discussed above, it can be replaced by welding. Finally, as mentioned above, the covering made of polymeric material is injection molded at least in the area corresponding to the first end. The arrangement of the covering helps to keep all the elements in their position and protect the attachment. Finally, the protective element referred to as a dust guard, as well as the rings and other parts normally used in any joint, are placed.

It is contemplated that the link comprises a plastic seat located between the axial ball and the socket defined by the first end, such that when the ball is introduced in the socket, it is done with the seat already placed in the actual ball.

On the other hand, it is also contemplated that no plastic seat is arranged, in which case the covering penetrates between the axial ball and the socket defined by the first end. During injection molding, the polymeric material enters the socket and surrounds the ball such that said injection molded material acts as a seat.

It is also contemplated that the second end incorporates a hole the central axis of which is perpendicular to the longitudinal axis or forms an angle with it, where said hole has a circumferential metal rim, obtained by press-forming or deep drawing, oriented towards the open side of the central segment. Press-forming can be done before or after bending or curving. An elastic joint, also referred to as silent-block, or a ball can thereby be housed in said second end.

On the other hand, it is also contemplated that the second end incorporates two holes the central axes of which coincide, where each hole has a circumferential metal rim, such that both holes face one another along their circumferential rims once the metal has been bent. Obviously, in this case the holes must be deep-drawn prior to bending. Like in the previous case, an elastic joint or a ball can be housed at said second end.

It is also contemplated that the second end is like the first end, i.e., another axial ball.

Finally, it is contemplated that the covering surrounds the entire body, i.e., also the central segment, thereby achieving greater protection of the body and savings in treating the metal.

The invention contemplates both a suspension system comprising a stabilizer link like the one defined above, as well as a vehicle comprising said stabilizer link.

### Description of the Drawings

To complement the description that is being made and for the purpose of aiding to better understand the features of the invention according to a preferred practical embodiment thereof, a series of drawings is attached as an integral part of said description in which the following has been depicted in an illustrative and nonlimiting manner:
Figure 1 shows a perspective view of a first embodiment of the stabilizer link of the invention, depicted with the axial ball housed in its position in the first end and with the covering made of polymeric material.
Figure 2 shows a perspective view of just the body of the embodiment of the link depicted in Figure 1, from an opposite end and opposite face, where the open side of the central segment and the second end of the body can be seen.
Figure 3 shows a longitudinal section of the first embodiment of the stabilizer link depicted in Figure 1.
Figure 4 shows a perspective view of a second embodiment of the stabilizer link of the invention, depicted with the axial ball housed in its position in the first end but without the protective element in order to better see the actual axial ball.
Figure 5 shows an exploded perspective view of the second embodiment of the link depicted in Figure 4 from an opposite end.
Figure 6 shows a longitudinal section of the second embodiment of the link depicted in Figures 4 and 5.
Figure 7 shows a perspective view of a third embodiment of the stabilizer link of the invention, in which the first end has a certain angle with respect to the longitudinal axis of the central segment and the second end houses a ball at 90° with respect to the longitudinal axis of the central segment of the body of the link, and where additionally the covering is located in both the area corresponding to the ends and in the central segment, i.e., it covers the entire body of the link.
Figure 8 shows another perspective view of the third embodiment depicted in Figure 7, in which the protective elements are not depicted in order to better see the balls.
Figure 9 shows an exploded perspective view of the third embodiment of the link, in which the covering made of polymeric material is not depicted in order to better see the body of the link.
Figure 10 shows the same perspective view depicted in Figure 9, in which the covering is depicted on the entire body, i.e., it covers both its ends and the central segment.
Figure 11 shows a longitudinal section of the third embodiment depicted in Figures 7 to 10.

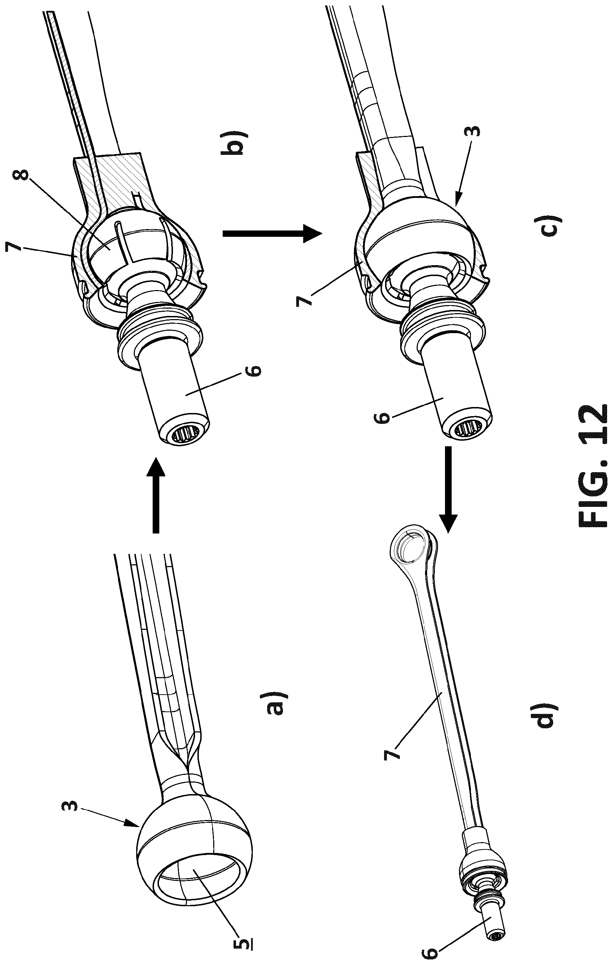

Figure 12 shows four schematic perspective views of a sequence of steps for placing the axial ball in its position at the first end of the stabilizer link of the invention.

### Preferred Embodiment of the Invention

In view of the described drawings, it can be seen how in one of the possible embodiments of the invention the stabilizer link proposed by the invention comprises a body (1) formed by a slender central segment (2) aligned according to a longitudinal axis (2'), a first end (3) and a second end (4).

The entire body (1) is a single piece of sheet metal shaped such that the central segment (2) has an open U-shaped cross section. The shape of the first end (3) defines a semi-enclosed socket (5) having a partially spherical or conical configuration configured for housing an axial ball (6) extending from the central segment (2) of the body (1).

The link comprises a covering (7) made of polymeric material surrounding said first end (2), preventing the axial ball (6) from being able to come out of the socket (5) defined by the first end (3).

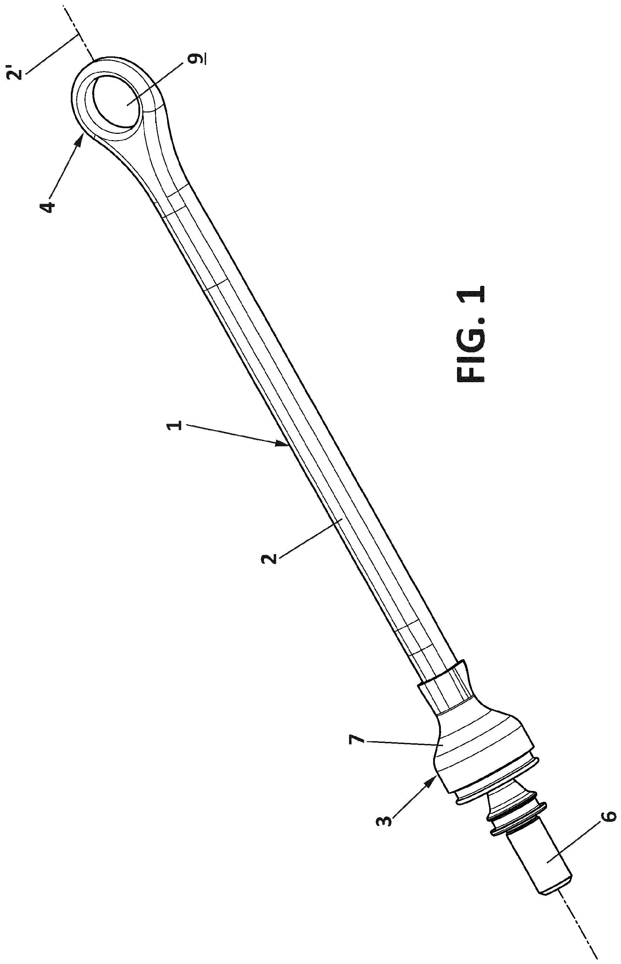

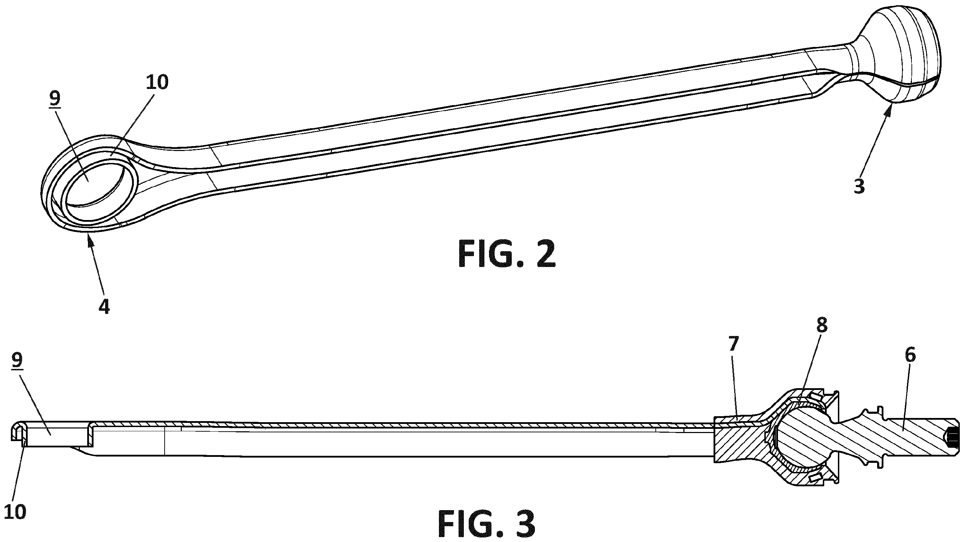

According to a first embodiment, depicted in Figures 1 to 3, the second end (4) incorporates a hole (9) the central axis of which is perpendicular to the longitudinal axis (2'), where said hole (9) has a circumferential metal rim (10) oriented towards the open side of the central segment (2).

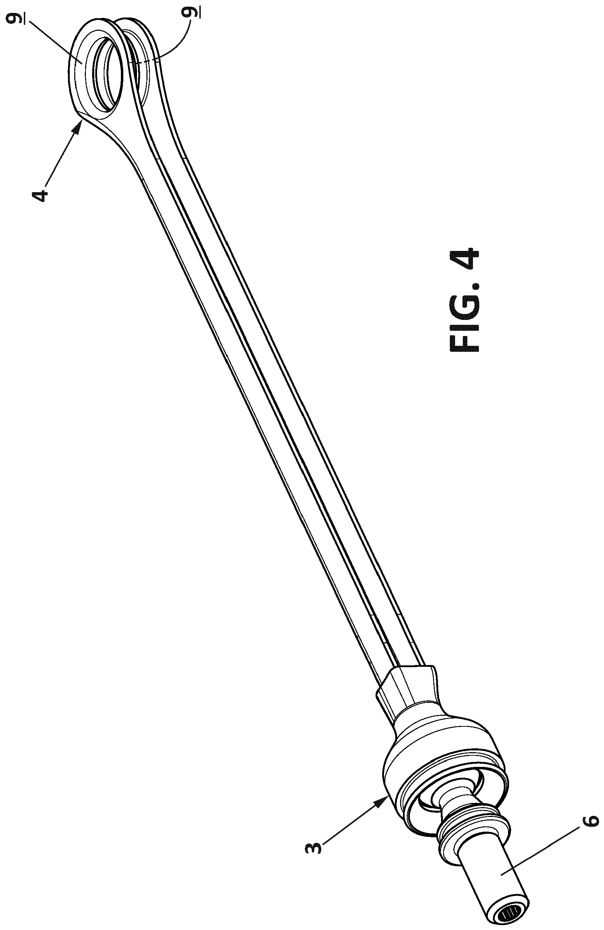

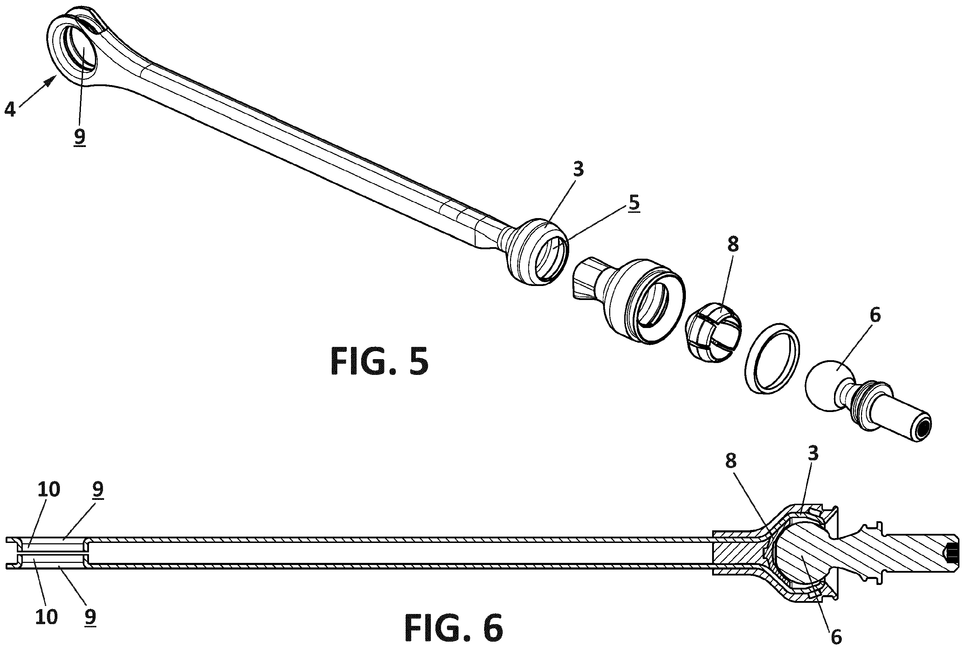

Figures 4 to 6 depict a second embodiment in which the second end (4) incorporates two holes (9) the central axes of which coincide and are perpendicular to the longitudinal axis (2'), where each hole (9) has a circumferential metal rim (10), such that both holes (9) face one another along their circumferential rims (10).

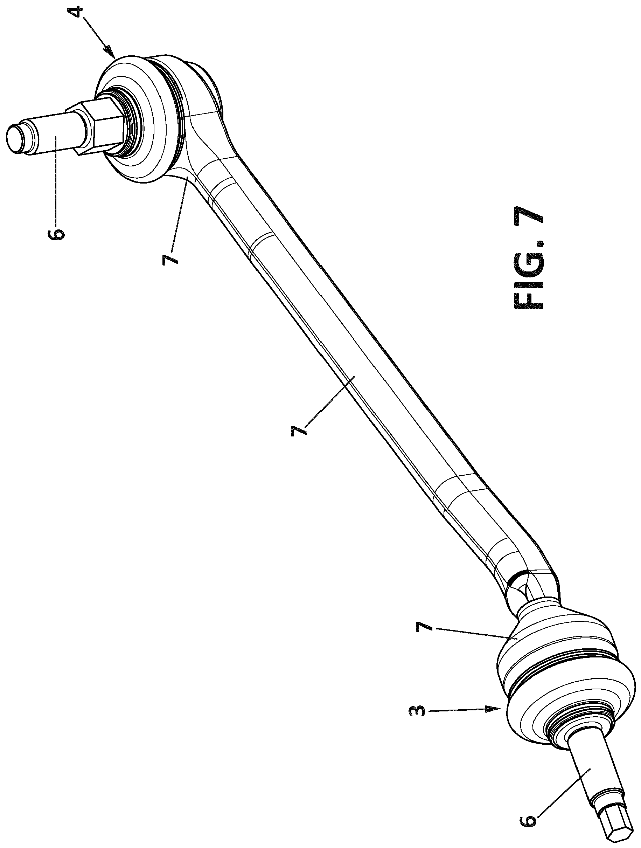

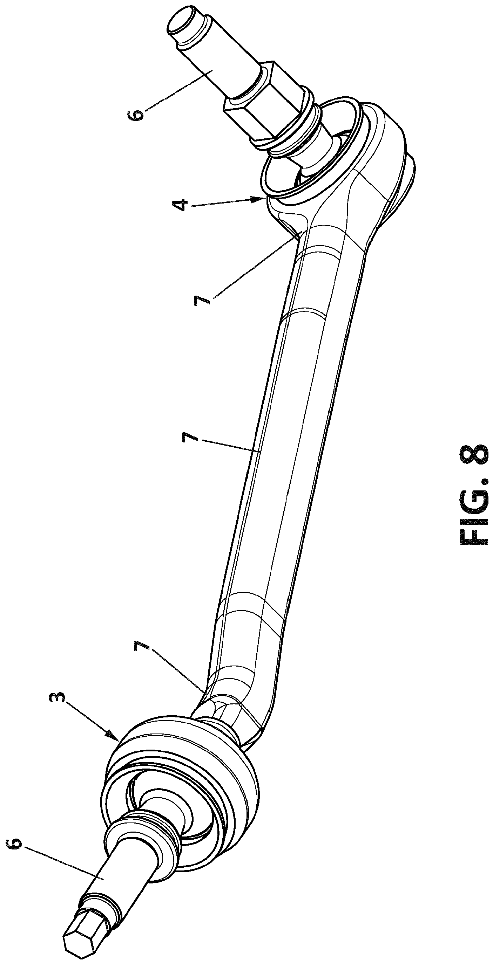

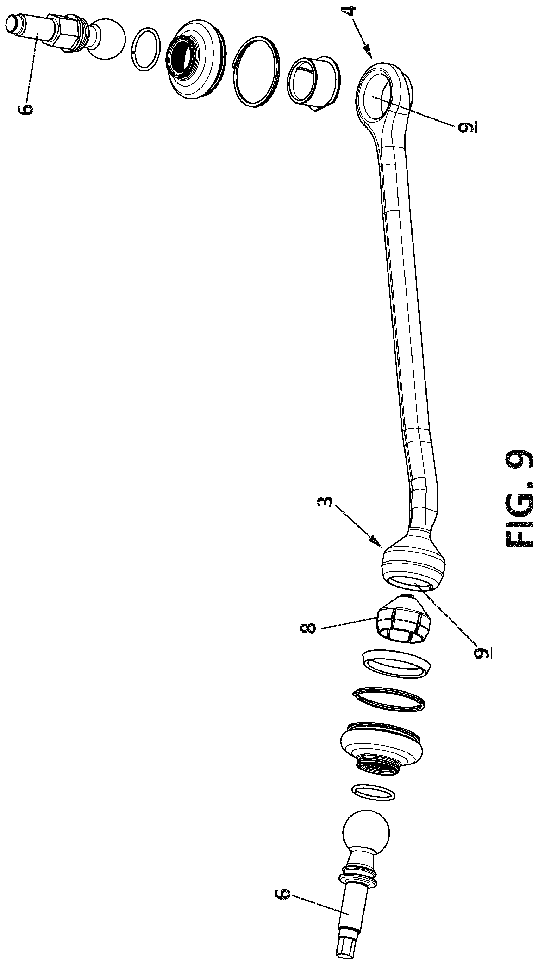

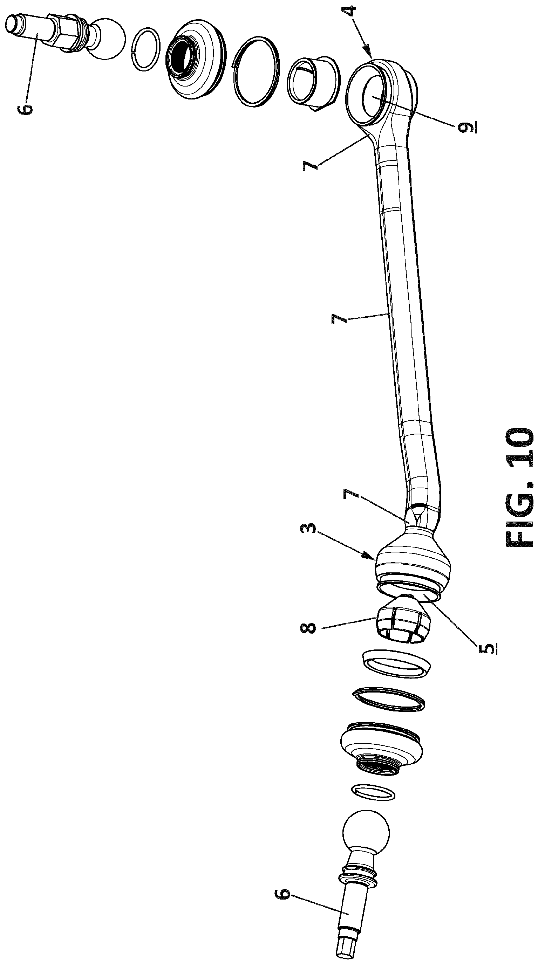

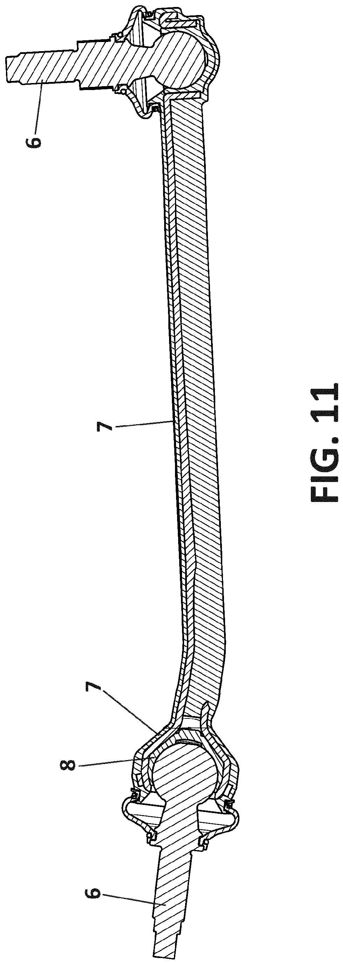

In a third embodiment depicted in Figures 7 to 11, the axial ball (6) of the first end (3) has a certain angle with respect to the longitudinal axis (2') and the second end (4) incorporates a ball at 90°, although there could also be another axial ball, but this case is not depicted.

In said third embodiment, the case in which the covering (7) surrounds the entire body (1) is depicted; however, this features can be applied to any of the embodiments of the invention described above.

In view of this description and set of drawings, the person skilled in the art will be able to understand that the embodiments of the invention that have been described can be combined in many ways within the object of the invention. The invention has been described according to several preferred embodiments thereof, but for the person skilled in the art it will be obvious that multiple variations can be introduced in said preferred embodiments without exceeding the object of the claimed invention.

## Claims

1. Stabilizer link for a vehicle suspension, comprising a body (1) formed by a slender central segment (2) aligned according to a longitudinal axis (2'), a first end (3) and a second end (4), **characterized in that** the entire the body (1) is a single piece of sheet metal shaped such that the central segment (2) has an open cross section and the shape of the first end (3) defines a semi-enclosed socket (5) having a partially spherical or conical configuration configured for housing an axial ball (6) extending from the central segment (2) of the body (1), the link comprising a covering (7) made of polymeric material surrounding said first end (2), preventing the axial ball (6) from being able to come out of the socket (5) defined by the first end (3).

2. Link according to claim 1, comprising a plastic seat (8) located between the axial ball (6) and the socket (5) defined by the first end (3).

3. Link according to claim 1, wherein the covering (7) penetrates between the axial ball (6) and the socket (5) defined by the first end (3).

4. Link according to any of the preceding claims, wherein the second end (4) incorporates a hole (9), where said hole (9) has a circumferential metal rim (10) oriented towards the open side of the central segment (2).

5. Link according to any of claims 1 to 3, wherein the second end (4) incorporates two holes (9) the central axes of which coincide, where each hole (9) has a circumferential metal rim (10), such that both holes (9) face one another along their circumferential rims (10).

6. Link according to any of claims 1 to 3, wherein the second end (4) is like the first end (3).

7. Link according to any of the preceding claims, wherein the covering (7) surrounds the entire body (1).

8. Suspension system comprising a stabilizer link according to any of claims 1 to 7.

9. Vehicle comprising a stabilizer link according to any of claims 1 to 7.
